# EUROPEAN PATENT APPLICATION

(11) **EP 1 992 669 A1**
(43) Date of publication of application: **19.11.2008**
(21) Application number: 06766410.2
(22) Date of filing: 22.05.2006
(51) Int. Cl.: C09D 11/00, B05D 1/26, B05D 7/24, B29C 45/14, B29C 51/00, B41M 5/00

(54) **PROCESS FOR PRODUCING INK AND RELEVANT TO THE PROCESS, INK, PRINTED MATTER AND MOLDING**

(30) Priority: 24.02.2006 JP 2006048430; 20.04.2006 JP 2006116810
(71) Applicant: TEIKOKU PRINTING INKS MFG. CO., LTD, Tokyo 108-0073 (JP)
(72) Inventor: TAKANO, Kenjic/o Teikoku Printing .., Tokyo;1160011 (JP); TORIHATA, Takuyac/o Teikoku Printing .., Tokyo;1160011 (JP); KIMURA, Junc/o Teikoku Printing .., Tokyo;1160011 (JP)
(74) Representative: von Füner, Nicolai
(86) International application number: PCT/JP2006/310608
(87) International publication number: WO 2007/097049

(57) **Abstract**

Provided is a method for manufacturing inkjet system ultraviolet curable inks which are improved in formability, adhesiveness and tackiness by selecting a combination of a monofunctional radical polymerization monomer as a major component with other polyfunctional radical polymerization oligomers and/or monofunctional radical polymerization monomers.

Also, obtained is a method for manufacturing inkjet system ultraviolet curable inks in which phenoxyethylacrylate is a basic composition used as a photo polymerization reactive composition and other monofunctional radical polymerization monomers and/or polyfunctional radical polymerization oligomers are mixed within a predetermined relative quantity, if necessary, thereby realizing results in which at least two of the above-described characteristics are favorable and the remaining one is far from poor, inks according to the method, decorating printed matter and decorating sheet shaped articles using the inks, and insert molding shaped products using the decorating printed matter and the decorating sheet shaped articles.

## Description

### [Field of the Invention]

The present invention relates to a method for manufacturing ultraviolet curable inks curable by ultraviolet rays after being laminated on a sheet as a substrate by inkjet system (hereinafter, referred to as "UV inkjet inks") and also relates to UV inkjet inks on the basis of the method, decorating printed matter and decorating sheet shaped articles obtained by printing or coating with the inks, and insert molding shaped products manufactured by using the decorating printed matter and the decorating sheet shaped articles.

### [Background Art]

An ultraviolet curable ink usually contains a photoreaction initiator and a photo polymerization reactive composition as essential constituents, to which a pigment, a dispersing agent and other additives etc., are mixed, if necessary.

A method for preparing decorating printed matter by adopting the ultraviolet curable ink adopts an inkjet system in which the ink is injected into a substrate sheet to be printed by jet printing and cured by irradiation of ultraviolet rays after lamination, in addition to a method in which ultraviolet rays are irradiated after printing performed by any kind of printing method such as screen printing and offset printing.

Since UV inkjet inks adopted in the above-described inkjet system are required to be low in viscosity, a monofunctional radical polymerization monomer, which is an indispensable component, is adopted as a photo polymerization reactive composition.

It is, however, understood that the monofunctional radical polymerizationmonomer is lower in curing speedandcross-linking density, if used solely, and is inferior in formability such as forming and also insufficient in adhesiveness.

In order to improve the above-described disadvantages, in most cases, a polyfunctional radical polymerization oligomer is mixed with a monofunctional radical polymerization monomer. However, there is a situation where this mixture cannot sufficiently improve the disadvantages.

In Patent Document 1, such a constitution is adopted that a polyfunctional radical polymerization monomer is given as a major component of the photo polymerization reactive composition and any one of α and β-unsaturated ether monomers i s also contained, for improving the formability (tenacity) and adhesiveness.

Nonetheless, the above-described constitution is excessively high in cross-linking density and also lower in such flexibility as to be deformable due to an abrupt cure, thereby posing another disadvantage of formability which is different from a case where the monofunctional radical polymerization monomer is previously used as a major component.

In Patent Document 2, in order to improve the disadvantage found in Patent Document 1, such a constitution is adopted that the monofunctional radical polymerization monomer is given as a major component of the photo polymerization reactive composition and at least one type of α and β-unsaturated ether monomers is contained as an indispensable component.

The above-described constitution is certainly better in flexibility for improving deformability as compared with the constitution disclosed in Patent Document 1. However, it is not necessarily sufficient in adhesiveness or not necessarily sufficient either in decreasing tackiness, that is, stickiness on the ink surface after ultraviolet curing.

### [Disclosure of the Invention]

As is apparent from the above-described background art, although monofunctional radical polymerization monomers are adopted as a major component in UV inkjet inks, no sufficient evaluation is made for how to select or combine them. As a result, no such improvement is attained in formability, adhesiveness or tackiness as to exhibit a higher flexibility.

In view of such a situation, an object of the present invention is to provide a method for manufacturing UV inkjet inks by procedures that a specific monofunctional radical polymerization monomer, which is a photo polymerization reactive composition, is used as a basic composition and combined with other monofunctional radical polymerization monomers and polyfunctional radical polymerization oligomers, if necessary, by which, of three characteristics consisting of highly flexible formability, improved adhesiveness and tackiness, at least two of them are excellent and the remaining one is far from poor, and it is also to provide UV inkjet inks based on this method, decorating printed matter, decorating sheet shaped articles and insert molding shaped products in which the inks are used.

In order to attain the object, a basic method of the present invention is constituted by the following.
(1) A method for manufacturing inkjet system ultraviolet curable inks in which essential components are a photoreaction initiator and a photo polymerization reactive composition, and the method for manufacturing inkjet system ultraviolet curable inks in which the photo polymerization reactive composition is a combination of phenoxyethylacrylate with one monomer selected f romany one of an aromatic monofunctional radical polymerization monomer with a hydroxyl group and a heterocyclic monofunctional radical polymerizationmonomer, that is, a total of two monomers, and a weight ratio of phenoxyethylacrylate to the other monofunctional radical polymerization monomers is in a range of 1 : 0.5 to 1.5.
(2) A method for manufacturing inkjet system ultraviolet curable inks in which essential components are a photoreaction initiator and a photo polymerization reactive composition, and the method for manufacturing inkjet system ultraviolet curable inks, wherein after being mixed with a polyfunctional radical polymerization oligomer, the photo polymerization reactive composition is mixed with only phenoxyethylacrylate as a monofunctional radical polymerization monomer, and a weight ratio of the polyfunctional radical polymerization oligomer to phenoxyethylacrylate is in a range of 0.05 to 0.3 : 1.
(3) A method for manufacturing inkjet system ultraviolet curable inks in which essential components are a photoreaction initiator and a photo polymerization reactive composition, and the method for manufacturing inkjet system ultraviolet curable inks, wherein after being mixed with a polyfunctional radical polymerization oligomer, the photo polymerization reactive composition is a combination of phenoxyethylacrylate with one other monofunctional radical polymerization monomer selected fromanyone of an aromatic monofunctional radical polymerization monomer without a hydroxyl group (however, excluding phenoxyethylacrylate) and a heterocyclic monofunctional radical polymerizationmonomer, that is, a total of two monomers, and a weight ratio of the polyfunctional radical polymerization oligomer to phenoxyethylacrylate to the other monofunctional radical polymerization monomers is in the respective ranges of 0.05 to 0.4 : 1 : 0.1 to 1.
(4) A method for manufacturing inkjet system ultraviolet curable inks in which essential components are a photoreaction initiator and a photo polymerization reactive composition, and the method for manufacturing inkjet system ultraviolet curable inks, wherein after being mixed with a polyfunctional radical polymerization oligomer, the photo polymerization reactive composition is a combination of phenoxyethylacrylate with one other monofunctional radical polymerization monomer selected from any one of an aliphatic monofunctional radical polymerization monomer without a hydroxyl group, an aliphatic monofunctional radical polymerization monomer with a hydroxyl group and an alicylic monofunctional radical polymerization monomer, that is, a total of two monomers, and a weight ratio of the polyfunctional radical polymerization oligomer to phenoxyethylacrylate to the other monofunctional radical polymerization monomers is in the respective ranges of 0.05 to 0.4 : 1 : 0.1 to 0.5.
(5) A method for manufacturing inkjet system ultraviolet curable inks in which essential components are a photoreaction initiator and a photo polymerization reactive composition, and the method for manufacturing inkjet system ultraviolet curable inks, wherein after being mixed with a polyfunctional radical polymerization oligomer, the photo polymerization reactive composition is a combination of phenoxyethylacrylate with one monofunctional radical polymerization monomer selected from alicylic monofunctional radical polymerization monomers, and one other monofunctional radical polymerization monomer selected from monofunctional radical polymerization monomers belonging to all other types (however, excluding phenoxyethylacrylate and the alicylic monofunctional radical polymerization monomer mixed with phenoxyethylacrylate), that is, a total of three monomers, and a weight ratio of the polyfunctional radical polymerization oligomer to phenoxyethylacrylate to the alicylic monofunctional radical polymerization monomer to the other monofunctional radical polymerization monomers is in the respective ranges of 0.05 to 0.4 : 1 : 0.1 to 0.7: 0.1 to 0.7.
(6) A method for manufacturing inkjet system ultraviolet curable inks in which essential components are a photoreaction initiator and a photo polymerization reactive composition, and the method for manufacturing inkjet system ultraviolet curable inks, wherein after being mixed with a polyfunctional radical polymerization oligomer, the photo polymerization reactive composition is a combination of henoxyethylacrylate, one monofunctional radical polymerization monomer selected from heterocyclic monofunctional radical polymerization monomers, and one other monofunctional radical polymerization monomer selected from monofunctional radical polymerization monomers belonging to all other types (however, excluding phenoxyethylacrylate and the heterocyclic monofunctional radical polymerization monomer mixed with phenoxyethylacrylate), that is, a total of three monomers, and a weight ratio of the polyfunctional radical polymerization oligomer to phenoxyethylacrylate to one monomer selected from heterocyclic monofunctional radical polymerization monomers to the other monofunctional radical polymerization monomers is in the respective ranges of 0.05 to 0.4 : 1 : 0.1 to 0.7 : 0.1 to 0.7.
(7) A method for manufacturing inkjet system ultraviolet curable inks in which essential components are a photoreaction initiator and a photo polymerization reactive composition, and the method for manufacturing inkjet system ultraviolet curable inks, wherein after being mixed with a polyfunctional radical polymerization oligomer, the photo polymerization reactive composition is a combination of phenoxyethylacrylate with two monofunctional radical polymerization monomers selected from alicylic monofunctional radical polymerization monomers and one other monofunctional radical polymerization monomer selected from monofunctional radical polymerization monomers belonging to all other types (however, excluding phenoxyethylacrylate and the two alicylic monofunctional radical polymerization monomers mixed with phenoxyethylacrylate), that is, a total of four monomers, and a weight ratio of the polyfunctional radical polymerization oligomer to phenoxyethylacrylate to two alicylic monofunctional radical polymerization monomers to the other monofunctional radical polymerization monomers is in the respective ranges of 0.05 to 0.4 : 1 : 0.1 to 0.7 : 0.1 to 0.7.
(8) A method for manufacturing inkjet system ultraviolet curable inks wherein essential components are a photoreaction initiator and a photo polymerization reactive composition, and the method for manufacturing inkjet system ultraviolet curable inks, wherein with a mixture of a polyfunctional radical polymerization oligomer given as a precondition, the photo polymerization reactive composition is a combination of phenoxyethylacrylate with one monofunctional radical polymerization monomer selected from alicylic monofunctional radical polymerization monomers, one monofunctional radical polymerization monomer selected from heterocyclic monofunctional radical polymerization monomers, and one other monofunctional radical polymerization monomer selected from monofunctional radical polymerization monomers belonging to all other types (however, excluding phenoxyethylacrylate, the alicylic monofunctional radical polymerization monomer and the heterocyclic monofunctional radical polymerization monomer mixed with phenoxyethylacrylate), that is, a total of four monomers, and a weight ratio of the polyfunctional radical polymerization oligomer to phenoxyethylacrylate to the alicylic monofunctional radical polymerization monomer to the heterocyclic monofunctional radical polymerization monomer to the other monofunctional radical polymerization monomers is in the respective ranges of 0.05 to 0.4 : 1 : 0.1 to 0.5 : 0.1 to 0.5 : 0.1 to 1.

### [Effects of the Invention]

As is apparent from the above-described description covering (1) to (8), in manufacturing methods of the present invention, phenoxyethylacrylate is adopted as a monofunctional radical polymerization monomer acting as a base of the photo polymerization reactive composition. In the constitution of (1) in which phenoxyethylacrylate is adopted in combination with the other monofunctional radical polymerization monomers, in the constitution of (2) in which after being mixed with a polyfunctional radical polymerization oligomer, phenoxyethylacrylate is adopted in no combination with other monofunctional radical polymerization monomers, and in remaining constitutions of (3), (4), (5), (6), (7), and (8) in which phenoxyethylacrylate is adopted in combination with other monofunctional radical polymerization monomers, such results are obtained at an extremely high probability that at least two characteristics of formability, adhesiveness and tackiness are excellent and the remaining one is far from poor, although there may be a case where it is not favorable.

Therefore, UV inkjet inks manufactured by the respective methods as well as decorating printed matter, decorating sheet shaped articles and insert molding shapedproducts based on these inks are to be able to exhibit favorable characteristics in general.

### [Best Mode for Carrying Out the Invention]

As is apparent from the constitutions of (1) through (8), in the present invention, phenoxyethylacrylate is adopted as a monofunctional radical polymerization monomer in preparing UV inkjet inks as a basic composition. However, sole use of phenoxyethylacrylate as a photo polymerization reactive composition will not always provide favorable results in all characteristics of formability, adhesiveness and tackiness. Therefore, selection is made from various combinations of phenoxyethylacrylate with other polyfunctional radical polymerization oligomers and/or monofunctional radical polymerization monomers, thereby providing UV inkjet inks improved in the individual characteristics, at which a basic technical idea of the present invention is found.

In the UV inkjet inks of the present application, although a major component is a monofunctional radical polymerization monomer which is based on phenoxyethylacrylate, a mixture with polyfunctional radical polymerization monomers and/or ultraviolet cation curable monomers is not excluded , and mixing these monomers at least to such an extent that will not undermine the effects of the present invention (specifically, such an extent that at least two characteristics of formability, adhesiveness and tackiness are favorable and the remaining one is far from poor) corresponds to a mode of utilization of the present invention.

Further, in the constitution of (1), not completely excluded is a mixture with radical polymerization oligomers, and a fact that 1.5-functional to polyfunctional radical polymerization oligomers are mixed at least to such an extent that will not undermine the effects of the present invention corresponds to a mode of utilization of the present invention.

Hereinafter, it will be confirmed by tests that the methods according to the basic constitutions of (1) to (8) are clearly excellent as embodiments. (In the combinations shown in each table given below, photoreaction initiators such as bisacyl phosphine oxide and 2-benzyl-2-dimethylamino-1-(4-morpholinophenyl)-butanone-1 are mixed in a quantity of about 10% as a whole on determination of the individual characteristics.)

An explanation will be made for the process leading to method (1). Specifically, phenoxyethylacrylate is combined with various types of monofunctional radical polymerization monomers and also allowed to change in weight ratio, thereby it is possible to obtain the results based on a general tendency of characteristics for each type as is shown in Table 1.

It is noted that various types of monofunctional radical polymerization monomers include substantially most monofunctional radical polymerization monomers actually adopted as UV inkjet inks, and such a adopting state is same in the case of constitutions of (2) to (8) it is after described in Table 2 to Table 7.

**[Table 1]**

| Types of monofunctional monomers | Weight ratio when phenoxyethylacrylate is set to be one | Formability | Adhesiveness | Tackiness |
|---|---|---|---|---|
| Aromatic monofunctional radical polymerization monomer (without hydroxyl group, however, excluding phenoxyethylacrylate) | 0.5 ∼ 1.5 | ○ or × | Δ or × | Δ or × |
| | 2 | × | × | × |
| Aromatic monofunctional radical polymerization monomer (with hydroxyl group) | 0.5 ∼ 1.5 | ○ | ○ or Δ | ○ |
| | 2 | ○ | × | Δ |
| Aliphatic monofunctional radical polymerization monomer (without hydroxyl group) | 0.5 ∼ 1.5 | × | × | × |
| | 2 | × | × | × |
| Aliphatic monofunctional radical polymerization monomer (with hydroxyl group) | 0.5 ∼ 1.5 | ○ or × | × | any one of ○, Δ, × |
| | 2 | Δ | × | Δ or × |
| Alicylic monofunctional radical polymerization monomer | 0.5 ∼ 1.5 | ○ or Δ | × | any one of ×, Δ, ○ |
| | 2 | Δ | × | Δ or × |
| Heterocyclic monofunctional radical polymerization monomer | 0.5 ∼1.5 | ○ | ○ | ○ |
| | 2 | ○ | Δ | Δ |

| | | | | |
|---|---|---|---|---|
| * Each of the symbols, ○, Δ, ×, is assessed according to the following criteria. | | | | |

### Formability test

○: showing a state that no cracks are found on coated film
Δ: showing a state that fine cracks are partially found to such an extent that can be barely confirmed by visual inspection
×: showing a state that cracks are found all over printed matter

### Adhesion test

○: showing a state that no peeling is found on coated film
Δ: showing a state that fundamentally no peeling is found on coated film but some found in the vicinity
×: showing a state that peeling is found conspicuously

### Tack test

○: showing a state that no stickiness (tackiness) is found when touched by finger
Δ: showing a state that tackiness is found to some extent when touched by finger but no marks remain after touched ×: showing a state that curing is not completed and marks remain when touched by finger

Estimation criteria for each of ○, Δ, × will be applied in the same way to the tables given below.

As is apparent from Table 1, where phenoxyethylacrylate is combined with an aromatic monofunctional radical polymerization monomer with a hydroxyl group and a heterocyclic monofunctional radical polymerization monomer in a range of 1 : 0.5 to 1.5, such results can be obtained that at least formability and tackiness are favorable and adhesiveness is not poor. However, it has been revealed that the above-described results are not obtained in combination with other types of monofunctional radical polymerization monomers.

An explanation will be made for the process leading to method (2) . Specifically, an aromatic polyfunctionalurethane acrylate oligomer or a polyfunctional epoxy acrylate oligomer is mixed, and as a photo polymerization reactive composition, phenoxyethylacrylate is mixed with other types of monofunctional radical polymerization monomers independently excluding it, thereby it is possible to obtain the results of individual characteristics as is shown in Table 2.

However, the weight ratio of the polyfunctional acrylate oligomer to phenoxyethylacrylate is in a range of 0.05 to 0. 3 : 1.

**[Table 2]**

| Monofunctional radical polymerization monomers or their types | Formability | Adhesiveness | Tackiness |
|---|---|---|---|
| Phenoxyethylacrylate | ○ or Δ * | ○ | Δ or ○* |
| Aromatic monofunctional radical polymerization monomer (with hydroxyl group) | Δ | × | Δ |
| Aliphatic monofunctional radical polymerization monomer (without hydroxyl group) | Δ or ○ | × | × |
| Aliphatic monofunctional radical polymerization monomer (with hydroxyl group) | ○ | × | Δ |
| Alicylic monofunctional radical polymerization monomer | Δ or ○ | × | Δ or × |
| Heterocyclic monofunctional radical polymerization monomer | × | Δ | × |

| | | | |
|---|---|---|---|
| * Of the individual characteristics, formability and tackiness are reverse in the marks of ○ and Δ, because even though one of the characteristics is Δ, the other is ○, and there is no case where both of them are Δ, and further there may also be a case where both of them are ○. | | | |

As apparent from Table 2, it has been revealed that formability and adhesiveness are favorable and tackiness is far from poor in the case of phenoxyethylacrylate being used, but the above-described favorable results are not obtained generally in the case of other types of monofunctional radical polymerization monomers being used.

An explanation will be made for the process leading to methods (3) and (4). Specifically, any one of an aromatic polyfunctional urethane acrylate oligomer, aliphatic urethane acrylate oligomer, epoxy acrylate oligomer and polyester acrylate oligomer, or a combination thereof is mixed. Then, phenoxyethylacrylate and one other monofunctional radical polymerization monomer, that is, a total of two monofunctional radical polymerization monomers, are combined. A weight ratio of the other monofunctional radical polymerization monomers to phenoxyethylacrylate is adjusted, thereby it is possible to obtain the results of individual characteristics for each type as shown in Table 3.

But, the weight ratio of the polyfunctional radical polymerization oligomer to phenoxyethylacrylate is in a range of 0.05 to 0.4: 1.

**[Table 3]**

| Types of monofunctional monomers | Weight ratio when phenoxyethylacrylate is set to be one | Formability | Adhesiveness | Tackiness |
|---|---|---|---|---|
| Aromatic monofunctional radical polymerization monomer (without hydroxyl group, however, excluding phenoxyethylacrylate) | 0.1 ∼ 1 | ○ or Δ* | ○ | △ or ○* |
| | 1.5 | Δ | △ | △ |
| Aromatic monofunctional radical polymerization monomer (with hydroxyl group) | 0.1 ∼ 0.5 | ○ | × | ○ |
| | 1 | Δ or × | × | ○ |
| Aliphatic monofunctional radical polymerization monomer (without hydroxyl group) | 0.1 ∼ 0.5 | ○ | ○ | ○ |
| | 1 | Δ or × | ○ or △ | × |
| Aliphatic monofunctional radical polymerization monomer (with hydroxyl group) | 0.1 ∼ 0.5 | ○ | ○ | ○ |
| | 1 | ○ or × | × | ○ |
| Alicylic monofunctional radical polymerization monomer | 0.1 ∼ 0.5 | ○ | ○ | △ or ○ |
| | 1 | Any one of ○, Δ, × | × | ○ |
| Heterocyclic monofunctional radical polymerization monomer | 0.1 ∼ 1 | ○ | ○ | △ or ○ |
| | 1.5 | Δ | △ | △ |

| | | | | |
|---|---|---|---|---|
| * Of the individual characteristics, formability and tackiness are reverse in the marks of ○ and △, because even though one of the characteristics is △, the other is ○, and there is no case where both of them are △, and further, there may also be a case where both of them are ○. | | | | |

As is apparent from Table 3, any one monomer selected from an aromatic monofunctional acrylate monomer without a hydroxyl group (however, excluding phenoxyethylacrylate) and a heterocyclic monofunctional radical polymerization monomer is combined with phenoxyethylacrylate in a weight ratio of 0.1 to 1:1, it has been revealed that formability and adhesiveness are favorable and tackiness is far from poor.

On the contrary, in the case where any one monomer selected from an aliphatic monofunctional radical polymerization monomer without a hydroxyl group, aliphatic monofunctional radical polymerization monomer with a hydroxyl group, and alicylic monofunctional radical polymerization monomer is combined with phenoxyethylacrylate in a weight ratio of 0.1 to 0.5:1, such results are obtained that all the characteristics of formability, adhesiveness and tackiness are favorable in general. However, in the case where the weight ratio is increased to 1:1, it has been revealed that the characteristics are less favorable than a combination with an aromatic monofunctional radical polymerization monomer without a hydroxyl group and a heterocyclic monofunctional radical polymerization monomer.

Further, in combination with an aromatic monofunctional radical polymerization monomer with a hydroxyl group, it has been revealed that adhesiveness is not favorable, irrespective of any weight ratio with phenoxyethylacrylate.

An explanation will be made for the process leading to method (5). Specifically, any one or a plurality of an aromatic polyfunctional urethane acrylate oligomer, aliphatic urethane acrylate oligomer, epoxy acrylate oligomer and polyester acrylate oligomer are combined and mixed. Then, phenoxyethylacrylate, any one monomer selected from alicylic monofunctional radical polymerization monomers, and any one monomer selected from all other assumable monofunctional radical polymerization monomers (however, excluding phenoxyethylacrylate and the alicylic monofunctional radical polymerization monomer mixed with phenoxyethylacrylate), that is, a total of three monofunctional radical polymerization monomers, are combined. Then, a weight ratio of the other monofunctional radical polymerization monomers to phenoxyethylacrylate is adjusted, thereby it is possible to obtain the results of individual characteristics for each type as shown in Table 4 (However, the weight ratio of the polyfunctional radical polymerization oligomer to phenoxyethylacrylate to the alicylic monofunctional radical polymerization monomer is in the respective ranges of 0.05 to 0.4 : 1 : 0.2 to 0.7.).

**[Table 4]**

| Types of monofunctional monomers | Weight ratio when phenoxyethylacrylate is set to be one | Formability | Adhesiveness | Tackiness |
|---|---|---|---|---|
| Aromatic monofunctional radical polymerization monomer (without hydroxyl group, however, excluding phenoxyethylacrylate) | 0.1 ∼ 0.7 | ○ or △* | △ our ○* | ○ |
| | 1.2 | ○ | × | △ |
| Aromatic monofunctional radical polymerization monomer (with hydroxyl group) | 0.1 ∼ 0.7 | ○ or △* | △ our ○* | ○ |
| | 1.2 | ○ | × | △ |
| Aliphatic monofunctional radical polymerization monomer (without hydroxyl group) | 0.1 ∼ 0.7 | ○ or △* | △ our ○* | ○ |
| | 1.2 | × | △ | ○ |
| Aliphatic monofunctional radical polymerization monomer (with hydroxyl group) | 0.1 ∼ 0.7 | ○ or △* | △ our ○* | ○ |
| | 1.2 | × | △ | ○ |
| Alicylic monofunctional radical polymerization monomer (however, excluding two acrylate monomers mixed previously with phenoxyethylacrylate) | 0.1 ∼ 0.7 | ○ or △* | △ our ○* | ○ |
| | 1.2 | ○ | × | △ |
| Heterocyclic monofunctional radical polymerization monomer | 0.1 ∼ 0.7 | ○ or △* | △ our ○* | ○ |
| | 1.2 | △ | ○ | △ |

| | | | | |
|---|---|---|---|---|
| * Of the individual characteristics, formability and adhesiveness are reverse in the marks of ○ and △, because even though one of the characteristics is △, the other is ○, there is no case where both of them are △, and further, there may also be a case where both of them are ○. | | | | |

As is apparent from Table 4, phenoxyethylacrylate is mixed with any one selected from alicylic monofunctional radical polymerization monomers at the above-described weight ratio and then combined with any one selected from monofunctional radical polymerization monomers belonging to all other assumable types. In the case phenoxyethylacrylate is set to be 1, it has been revealed the individual characteristics are favorable for the monofunctional radical polymerization monomers belonging to all types in a range of weight ratio of 0.1 to 0.7.

It is noted that isobornyl acrylate is in most cases favorably adopted as an alicylic monofunctional radical polymerization monomer to be mixed with phenoxyethylacrylate.

An explanation will be made for the process leading to method (6). Specifically, any one or a plurality of an aromatic polyfunctional urethane acrylate oligomer, aliphatic urethane acrylate oligomer, epoxy acrylate oligomer and polyester acrylate oligomer are combined and mixed. Then, phenoxyethylacrylate, one monomer selected from heterocyclic monofunctional radical polymerization monomers, any one monomer selected from other assumable monofunctional radical polymerization monomers (however, excluding phenoxyethylacrylate and the heterocyclic monofunctional radical polymerization monomer mixed with phenoxyethylacrylate), that is, a total of three monofunctional radical polymerization acrylate monomers, are combined. A weight ratio of the other monofunctional radical polymerization acrylate monomers to phenoxyethylacrylate is adjusted, thereby it is possible to obtain the results of individual characteristics for each type as shown in Table 5.

But, the weight ratio of the polyfunctional radical polymerization oligomer to phenoxyethylacrylate to the heterocyclic monofunctional radical polymerization monomer is in the respective ranges of 0.05 to 0.4 : 1 : 0.1 to 0.7.

**[Table 5]**

| Types of monofunctional monomers | Weight ratio when phenoxyethylacrylate is set to be one | Formability | Adhesiveness | Tackiness |
|---|---|---|---|---|
| Aromatic monofunctional radical polymerization monomer (without hydroxyl group) | 0.1 ∼ 0.7 | ○ or △* | ○ | △ our ○* |
| | 1.2 | ○ | △ | △ |
| Aromatic monofunctional radical polymerization monomer (with hydroxyl group) | 0.1 ∼ 0.7 | ○ or △* | ○ | △ our ○* |
| | 1.2 | ○ | △ | △ |
| Aliphatic monofunctional radical polymerization monomer (without hydroxyl group) | 0.1 ∼ 0.7 | ○ or △* | ○ | △ our ○* |
| | 1.2 | △ | △ | △ |
| Aliphatic monofunctional radical polymerization monomer (with hydroxyl group) | 0.1 ∼ 0.7 | ○ or △* | ○ | △ or ○* |
| | 1.2 | △ | △ | △ |
| Alicylic monofunctional radical polymerization monomer | 0.1 ∼ 0.7 | ○ | ○ or △ | ○ |
| | 1.2 | ○ | △ | △ |
| Heterocyclic monofunctional radical polymerization monomer (however, excluding a monomer mixed previously with phenoxyethylacrylate) | 0.1 ∼ 0.7 | ○ | ○ | ○ |
| | 1.2 | △ | ○ | △ |

| | | | | |
|---|---|---|---|---|
| * Of the individual characteristics, formability and tackiness are reverse in the marks of ○ and △, because even though one of the characteristics is △, the other is ○, and there is no case where both of them are △, and further, there may also be a case where both of them are ○. | | | | |

As is apparent from Table 5, phenoxyethylacrylate is mixed with any one selected from heterocyclic monofunctional radical polymerization monomers at the above-described weight ratio and then combined with any one selected from monofunctional radical polymerization monomers belonging to all other assumable types. In the case where phenoxyethylacrylate is set to be 1, all the characteristics are revealed to be favorable for the monofunctional radical polymerization monomers belonging to all the types where a weight ratio of the other monofunctional radical polymerization monomers is in a range of 0.2 to 0.7.

It is noted that N-vinylcaprolactam is in most cases favorably adopted as a heterocyclic monofunctional radical polymerization monomer to be mixed with phenoxyethylacrylate.

An explanation will be made for the process leading to method (7). Specifically, any one or a plurality of an aromatic polyfunctional urethane acrylate oligomer, aliphatic urethane acrylate oligomer, epoxy acrylate oligomer and polyester acrylate oligomer are combined and mixed. Then, phenoxyethylacrylate, any two monomer selected from alicylic monofunctional radical polymerization monomers and any one monomer selected from other assumable monofunctional radical polymerization monomers (however, excluding phenoxyethylacrylate and the two alicylic monofunctional radical polymerization monomers mixed with phenoxyethylacrylate), that is, a total of four monofunctional radical polymerization monomers, are combined. Then, a weight ratio of the other monofunctional radical polymerization monomers to phenoxyethylacrylate is adjusted, thereby it is possible to obtain the results of individual characteristics for each type as shown in Table 6 (Method (7) is characterized in that one alicylic monofunctional radical polymerization monomer is substituted for two monomers by method (5), but actually obtained characteristics are substantially the same as those obtained by method (5) as shown in Table 4.).

But, the weight ratio of polyfunctional radical polymerization oligomer to phenoxyethylacrylate to two alicylic monofunctional radical polymerization monomers is in the respective ranges of 0.05 to 0.4 : 1 : 0.1 to 0.7.

**[Table 6]**

| Types of monofunctional monomers | Weight ratio when phenoxyethylacrylate is set to be one | Formability | Adhesiveness | Tackiness |
|---|---|---|---|---|
| Aromatic monofunctional radical polymerization monomer (without hydroxyl group, however, excluding phenoxyethylacrylate) | 0.1 ∼ 0.7 | ○ or △* | △ or ○* | ○ |
| | 1.2 | ○ | △ | △ |
| Aromatic monofunctional radical polymerization monomer (with hydroxyl group) | 0.1 ∼ 0.7 | ○ or △* | △ or ○* | ○ |
| | 1.2 | ○ | △ | △ |
| Aliphatic monofunctional radical polymerization monomer (without hydroxyl group) | 0.1 ∼ 0.7 | ○ or △* | △ or ○* | ○ |
| | 1.2 | × | △ | ○ |
| Aliphatic monofunctional radical polymerization monomer (with hydroxyl group) | 0.1 ∼ 0.7 | ○ or △* | △ or ○* | ○ |
| | 1.2 | × | △ | ○ |
| Alicylic monofunctional radical polymerization monomer (however, excluding two acrylate monomers mixed previously together with phenoxyethylacrylate) | 0.1 ∼ 0.7 | ○ or △* | △ or ○* | ○ |
| | 1.2 | ○ | × | △ |
| Heterocyclic monofunctional radical polymerization monomer | 0.1 ∼ 0.7 | ○ or △* | ○ or △* | ○ |
| | 1.2 | △ | ○ | △ |

| | | | | |
|---|---|---|---|---|
| * Of the individual characteristics, formability and adhesiveness are reverse for the marks of ○ and △, because even though one of the characteristics is △, the other is ○, and there is no case where both of them are △, and further, there may also be a case where both of them are ○. | | | | |

As is apparent from Table 4, phenoxyethylacrylate is mixed with any two monomers selected from alicylic monofunctional radical polymerization monomers at the above-described weight ratio and then combined with any one monomer selected from monofunctional radical polymerization monomers belonging to all other assumable types. In the case where phenoxyethylacrylate is set to be 1 , it has been revealed that all the characteristics are favorable for the monofunctional radical polymerization monomers belonging to all types where a weight ratio of two alicylic monofunctional radical polymerization monomers and monofunctional radical polymerization monomers belonging to all other assumable types is respectively in a range of 0.1 to 0.7.

An explanation will be made for the process leading to method (8). Specifically, any one of an aromatic polyfunctional urethane acrylate oligomer, aliphatic urethane acrylate oligomer, epoxy acrylate oligomer and polyester acrylate oligomer or a combination thereof was mixed. Then, phenoxyethylacrylate, one monomer selected from alicylic monofunctional radical polymerization monomers, one monomer selected from heterocyclic monofunctional radical polymerization monomers, a subtotal of three monofunctional radical polymerization monomers, and one monomer selected from other assumable monofunctional radical polymerization monomers (however, excluding phenoxyethylacrylate, the alicylic monofunctional radical polymerization monomer mixed with phenoxyethylacrylate and heterocyclic monofunctional radical polymerizationmonomer), that is, a total of fourmonofunctional radical polymerization monomers were combined. A weight ratio of other monofunctional radical polymerization monomers to phenoxyethylacrylate is adjusted, thereby it is possible to obtain the results of individual characteristics for each type as shown in Table 7.

But, the weight ratio of the polyfunctional radical polymerization oligomer to phenoxyethylacrylate to the alicylic monofunctional radical polymerization monomer to the heterocyclic monofunctional radical polymerization monomer is in the respective ranges of 0.05 to 0. 4 : 1 : 0.1 to 0.5 : 0.1 to 0.5.

**[Table 7]**

| Types of monofunctional monomers | Weight ratio when phenoxyethylacrylateis set to be one | Formability | Adhesiveness | Tackiness |
|---|---|---|---|---|
| Aromatic monofunctional radical polymerization monomer (without hydroxyl group, however, excluding phenoxyethylacrylate) | 0.1 ∼ 1 | ○ or △* | △ or ○* | ○ or △* |
| | 1.5 | ○ | △ | △ |
| Aromatic monofunctional radical polymerization monomer (with hydroxyl group) | 0.1 ∼ 1 | o or ○* | △ or ○* | ○ |
| | 1.5 | △ | ○ | △ |
| Aliphatic monofunctional radical polymerization monomer (without hydroxyl group) | 0.1 ∼ 1 | ○ or △* | △ or ○* | ○ |
| | 1.5 | ○ | × | ○ |
| Aliphatic monofunctional acrylate monomer (with hydroxyl group) | 0.1 ∼ 1 | ○ or △* | △ or ○* | ○ |
| | 1.5 | △ | × | ○ |
| Alicylic monofunctional radical polymerization monomer (however, excluding a monomer mixed previously with phenoxyethylacrylate) | 0.1 ∼ 1 | ○ or △* | △ or ○* | ○ |
| | 1.5 | △ | × | ○ |
| Heterocyclic monofunctional radical polymerization monomer (however, excluding a monomer mixed previously with phenoxyethylacrylate) | 0.1 ∼ 1 | ○ or △* | △ or ○* | ○ or △* |
| | 1.5 | ○ | △ | △ |

| | | | | |
|---|---|---|---|---|
| * Of the individual characteristics, formability and adhesiveness are reverse for the marks of ○ and △, because even though one of the characteristics is △, the other is ○, and there is also a case where both of them are ○. The same item is applicable to a fact that adhesiveness and tackiness are also reverse in the marks of ○ and △. | | | | |

As is apparent from Table 7, phenoxyethylacrylate, one monomer selected from alicylic monofunctional radical polymerization monomers and one monomer selected from heterocyclic monofunctional radical polymerization monomers, a subtotal of three monofunctional radical polymerization monomers, and any one monomer selected from monofunctional radical polymerization monomers belonging to all other assumable types, that is, a total of four monomers, are combined. In the case where phenoxyethylacrylate is set to be 1 , it has been revealed that the characteristics are favorable for the monofunctional radical polymerization monomers belonging to all types where a weight ratio of other monofunctional radical polymerization monomers is in a range of 0.1 to 1.

In the constitutions of (5) and (6), respectively an alicylic monofunctional radical polymerization monomer and a heterocyclic monofunctional radical polymerizationmonomer are indispensable for one of three monofunctional radical polymerization monomers. However, in the constitution of (8), both of these monomers are given as indispensable monofunctional radical polymerization monomers. The constitution of (8) may be explained such as one of the heterocyclic monofunctional radical polymerization monomer and the alicylic monofunctional radical polymerization monomer is added respectively to the constitution of (5) and (6) and finally corresponds to a constitution in which the constitutions of (5) and (6) are utilized.

The constitution of (8) is able to provide favorable results stably in various combinations. Therefore, it may be well expected that favorable characteristics may also be obtained even when one or a plurality of the monofunctional radical polymerization monomers are mixed to the constitution of (8).

Thus, a constitution in which other one or a plurality of the monofunctional radical polymerization monomers are added to and mixed with the constitution of (8) corresponds to constitution in which of (8) is utilized.

Isobornyl acrylate and N-vinylcaprolactam are in most cases favorably adopted respectively as a typical example of an alicylic monofunctional radical polymerization monomer and a heterocyclic monofunctional radical polymerization monomer to be mixed with phenoxyethylacrylate.

In each of the above-described methods (1), (2), (3), (4), (5), (6), (7) and (8), inks to which pigments, high-polymer dispersing agents and additives etc., are added, if necessary, may provided with favorable characteristics at least for two of the individual characteristics.

It is noted that these inks are from 3 to 500 cps in viscosity (determined at 25°C by using a cone-plate type viscometer), which is a viscosity favorably corresponding to inkjetprinting.

Therefore, decorating printed matter which form a decorating lamination layer by curing steps in which these inks are applied to a substrate by inkjet injection into or printing to give a single or a plurality of coated layers and ultraviolet rays are irradiated on the coated layers, decorating sheet shaped articles based on formation of the decorating printed matter by vacuum forming or pressure forming and insert molding shaped products integrally formed on injection of a molding resin into the decorating printed matter or the decorating sheet shaped articles by using an injection machine may manufactured in a state that cracks on a coated film, stickiness, and peeling are hardly found in a step leading to lamination.

It is noted that sheets and films based on polycarbonate, (treated) polyester, (treated) polypropylene, (treated) polyethylene and an acrylic resin etc may be used as the substrate.
These prepared by imparting a printed layer or a coated layer to these sheets or films by screen printing, offset printing, gravure printing, roll coating process or spray coating etc. , may also be used as the substrate.

In forming the insert molding shaped product, a binder layer is provided on a decorating layer by printing or coating for the purpose of increasing the adhesiveness between the molding resin and the decorating printed matter or between the molding resin and a decorating lamination layer of the decorating sheet shaped article, thereby it is possible to prepare insert molding shaped products higher in quality.

Inks and paints for forming a binder layer may include IMB-003 Binder and IMB-009 Binder (productnames) made by Teikoku Printing Inks Mfg. Co., Ltd., which are binder inks using thermoplastic resins such as an acrylic resin and a polyvinyl chloride vinyl acetate copolymer resin etc.

Further, the molding resin may include ABS (acrylbutadiene styrol) resins, PC (polycarbonate) resins, PP (polypropylene) resins, and PA (polyamide) resins.

Hereinafter, an explanation will be made by referring to examples.

### [Example 1]

Example 1 is characterized in that an aromatic monofunctional radical polymerization monomer with a hydroxyl group is 2-hydroxy-3-phenoxypropylacrylate and a heterocyclic monofunctional radical polymerization monomer is N-vinylcaprolactam in the above-described method of (1).

Provided were carbon black of 2% as a pigment, bisacyl phosphine oxide of 4.3% by weight and 2-benzyl-2-dimethylamino-1-(4-morpholinophenyl)-butanone-1 of 5.0% by weight (a total of 9.3% by weight), respectively, as a photoreaction initiator, a high-polymer dispersing agent of 1.5% by weight, a silicon-based anti-foaming agent of 0.1% by weight and a hydroxyl amine-based preservation/stability imparter of 0.1% by weight (a total of 0.2% by weight), respectively, as additives. A monofunctional radical polymerization monomer was mixed in a predetermined quantity with phenoxyethylacrylate, each mixed quantity of which was predetermined as shown in Table 8-1, thereby obtaining the results of characteristics as shown in the table.

A bar coater No. 8 was used to coat the above-described components on EC-100 transparent PC (0.5mm in thickness) made by TSUTSUNAKA PLASTIC INDUSTRY CO., LTD. and ultraviolet rays were irradiated at an intensity of 1000mW/cm² until accumulated energy reached 800mJ/cm², thereby conducting a formability test, an adhesion test and a tack test under the following conditions, thereby the individual characteristics were determined.

Formability test: A circular disk (2.5cm in diameter and 1cm in width) was used to effect vacuum-forming at 180°C for 30 seconds, thereby assessing a state of cracks found on a coated film.

Adhesiontest : Five squares with 1 mm in width were provided respectively in the longitudinal direction and the horizontal direction on the coated film, a total of 25 squares, Scotch tape was pasted on a part covering these squares and peeled off at 90° to assess a state of the squares at this stage.

Tack test: The coated film was touched by finger to assess the stickiness.

Assessment criteria for ○, △, × given in the table below will be the same as those explained in the above-described embodiments.

Table 8-1 shows the results of individual characteristics.

**[Table 8-1]**

| Types of monofunctional monomers | Chemical names | Mixed quantity of monofunctional monomer under the above chemical name (% by weight) | Mixed quantity of phenoxyethylacrylate (% by weight) | Formability | Adhesiveness | Tackiness |
|---|---|---|---|---|---|---|
| Aromatic monofunctional radical polymerization monomer (with hydroxyl group) | 2-hydroxy-3-phenoxypropylacrylate | 43.5 | 43.5 | ○ | △ | ○ |
| | | 29.0 | 58.0 | ○ | ○ | △ |
| | | 52.2 | 34.8 | ○ | △ | ○ |
| Heterocyclic monofunctional radical polymerization monomer | N-vinylcaprolactam | 43.5 | 43.5 | ○ | ○ | ○ |
| | | 29.0 | 58.0 | ○ | ○ | △ |
| | | 52.2 | 34.8 | ○ | ○ | △ |

In each example given in Table 8-1, the individual characteristics were tested for value requirements of a weight ratio in the basic constitution of (1), in particular, for those of 2-hydroxy-3-phenoxypropylacrylate and N-vinylcaprolactam until a limited value of the weight ratio. It was confirmed that favorable results were obtained at least in two characteristics.

It may be assumed that similar test results can be obtained where a monomer other than 2-hydroxy-3-phenoxypropylacrylate is used as an aromatic monofunctional radical polymerization monomer with a hydroxyl group and also where a monomer other than N-vinylcaprolactam is adopted as an alicylic monofunctional radical polymerization monomer. When the above-described assumption is taken into account, the validity of the constitution of (1) may be confirmed by referring to the test results given in Table 8-1.

After phenoxyethylacrylate was mixed at 43.5% by weight with the combinations given in Table 8-1, other monofunctional radical polymerization monomers were mixed therewith all at 43.5% by weight as shown in Table 8-2, thereby a similar test was conducted to obtain the results of individual characteristics as given in the table.

**[Table 8-2]**

| Types of monofunctional monomers | Chemical names | Formability | Adhesiveness | Tackiness |
|---|---|---|---|---|
| Aromatic monofunctional radical polymerization monomer (without hydroxyl group) | Benzyl acrylate | × | △ | △ |
| | Phenoxy ethyleneglycol acrylate | × | △ | × |
| | Phenoxy tetraethylene glycol acrylate | × | × | × |
| | Nonyl phenol tetraethylene glycol acrylate | ○ | × | × |
| Aliphatic monofunctional radical polymerization monomer (without hydroxyl group) | Ethoxy diethylene glycol acrylate | × | × | × |
| Aliphatic monofunctional acrylate monomer (with hydroxyl group) | 2-hydroxy ethylacrylate | ○ | × | ○ |
| | 2-hydroxy propylacrylate | ○ | × | △ |
| | 2-hydroxy butylacrylate | × | × | × |
| Alicylic monofunctional radical polymerization monomer | Dicyclopentenyl acrylate | × | × | △ |
| | Isobornyl acrylate | × | × | △ |

It has been revealed as is apparent through comparison between Table 8-1 and Table 8-2 that an aromatic monofunctional radical polymerization monomer without a hydroxyl group or a heterocyclic monofunctional radical polymerization monomer is combined with phenoxyethylacrylate to obtain favorable characteristics as shown in the constitution of (1), but no favorable results can be obtained where other types of monofunctional radical polymerization monomers are combined.

Each of the inks given in Table 8-1 were subjected to irradiation of ultraviolet rays under the same conditions as those of the above-described tests and cured on a substrate sheet made with a polycarbonate resin. Then, the substrate sheet was vacuum-formed and an ABS resin was laminated by using an injection machine and formed integrally to mold an insert molding shaped product. In molding the shaped product, each of the inks was not in a tacky state on the substrate sheet, substantially favorable in formability and also generally favorable in adhesion with the substrate sheet, with no peeling found at all. It was, therefore, possible to obtain strong insert molding shaped products.

### [Example 2]

Example 2 corresponds to the basic constitution of (2).

As with Example 1, provided were a pigment, a photoreaction initiator, a high-polymer dispersing agent and an additive. Phenoxyethylacrylate in a predetermined mixed quantity was mixed with trifunctional urethane acrylate oligomers, each mixed quantity of which was predetermined as shown in Table 9-1, and a test similar to Example 1 was conducted to obtain the results of individual characteristics as given in the table.

**[Table 9-1]**

| Types of monofunctional monomers | Chemical name | Mixed quantity of phenoxyethylacrylate (% by weight) | Mixed quantity of trifunctional urethane acrylate (% by weight) | Formability | Adhesiveness | Tackiness |
|---|---|---|---|---|---|---|
| Aromatic monofunctional radical polymerization monomer(without hydroxyl group) | Phenoxyethylacrylate | 81.0 | 6.0 | ○ | ○ | △ |
| | | 82.8 | 4.2 | ○ | ○ | △ |
| | | 67.0 | 20.0 | △ | ○ | ○ |

In the example given in Table 9-1, a weight ratio according to the constitution of (2) was tested up to a limit value thereof by allowing each component to change in relative quantity. The test has revealed that favorable results were obtained at least in two characteristics.

Therefore, the validity of the constitution of (2) may be confirmed by referring to the test results given in Table 9-1.

Af ter a tri functional urethane acrylate oligomer was mixed at 6.0% by weight with the combination given in Table 9-1, monomers belonging to other aromatic monofunctional radical polymerization monomers without a hydroxyl group as shown in Table 9-2 were mixed at 81.0% by weight, and a similar test was conducted to obtain the results of individual characteristics as given in the table.

**[Table 9-2]**

| Types of monofunctional monomers | Chemical names | Formability | Adhesiveness | Tackiness |
|---|---|---|---|---|
| Aromatic monofunctional radical polymerization monomer (without hydroxyl group) | Benzyl acrylate | ○ | × | × |
| | Phenoxydiethylene glycol acrylate | × | ○ | △ |
| | Phenoxytetraethylene glycol acrylate | △ | × | × |
| | Phenoxyhexaethyleneglycol acrylate | △ | × | × |
| | Nonyl phenol EOmodifiedacrylate | △ | × | × |

It has been revealed as is apparent through comparison between Table 9-1 and Table 9-2 that after being mixed with a polyfunctional radical polymerization oligomer, an aromatic monofunctional radical polymerization monomer without a hydroxyl group is adopted independently as a major component, favorable characteristics may be obtained in the case of phenoxyethylacrylate, but no favorable results may be obtained in the case of the other monofunctional radical polymerization monomers.

The ink given in Table 9-1 was used to mold insert molding shaped products under the same conditions as those of Example 1. It was, therefore, possible to obtain strong insert molding shaped products substantially favorable in formability, adhesiveness and tackiness and also favorable in adhesion with a substrate.

### [Example 3]

Example 3 is characterized in that in method (3), an aromatic monofunctional radical polymerization monomer without a hydroxyl group is any one of benzyl acrylate and phenoxydiethylene glycol acrylate and a heterocyclic monofunctional radical polymerization monomer is N-vinyl caprolactam.

As with Example 1, providedwere a pigment, a photoreaction initiator, a high-polymer dispersing agent and an additive. Other monofunctional radical polymerization monomers in a predetermined mixed quantity were mixed with a trifunctional urethaneacrylate oligomer and phenoxyethylacrylate, each mixed quantity of which was predetermined as given in Table 10-1, and a test similar to Example 1 was conducted to obtain the results of individual characteristics as shown in the table.

**[Table 10-1]**

| Types of monofunctional monomers | Chemical name | Mixed quantity of monofunctional monomer of the above chemical name (% by weight) | Mixed quantity of trifunctional urethane acrylate oligomer (% by weight) | Mixed quantity of phenoxyethylacrylate (% by weight) | Formability | Adhesiveness | Tackiness |
|---|---|---|---|---|---|---|---|
| Aromatic monofunctional radical polymerization monomer (without hydroxyl group) | Benzyl acrylate | 40.5 | 6.0 | 40.5 | ○ | ○ | ○ |
| | Phenoxydiethylene glycol acrylate | 40.5 | 6.0 | 40.5 | ○ | ○ | △ |
| | | 7.5 | 3.8 | 75.7 | ○ | ○ | ○ |
| | | 42.3 | 2.2 | 42.5 | ○ | ○ | △ |
| | | 5.8 | 23.2 | 58.0 | △ | ○ | ○ |
| | | 36.3 | 14.4 | 36.3 | ○ | ○ | △ |
| Heterocyclic monofunctional radical polymerization monomer | N-vinylcaprolactam | 40.5 | 6.0 | 40.5 | ○ | ○ | ○ |

In the test given in Table 10-1, a weight ratio according to the constitution of (3) was tested up to a limit value thereof, in particular, by allowing phenoxyethyleneglycol acrylate to change in mixed quantity variously. The test has revealed that favorable results were obtainedat least in two characteristics.

Since it can be assumed that favorable results may also be obtained for the other monofunctional monomer, confirmation can be made for the validity of the constitution of (3) by referring to the test results given in Table 10-1.

Then, after phenoxyethylacrylate was mixed at 40.5% by weight, as shown in Table 10-2, the other monofunctional radical polymerization monomers was mixed at 40.5% by weight and combined with phenoxyethylacrylate. Then, the same test was conducted, thereby obtaining the results of individual characteristics as shown in the table.

**[Table 10-2]**

| Types of monofunctional monomers | Chemical name | Formability | Adhesiveness | Tackiness |
|---|---|---|---|---|
| Aromatic monofunctional radical polymerization monomer (with hydroxyl group) | 2-hydroxy-3-phenoxypropylacrylate | × | △ | ○ |
| Aliphatic monofunctional radical polymerization monomer (without hydroxyl group) | Ethoxydiethylene glycol acrylate | △ | ○ | × |
| Aliphatic monofunctional radical polymerization monomer (with hydroxyl group) | 2-hydroxyethylacrylate | | × | ○ |
| | 2-hydroxypropylacrylate | ○ | × | ○ |
| | 2-hydroxybutylacrylate | × | × | ○ |
| Alicylic monofunctional radical polymerization monomer | Dicyclopentenyl acrylate | × | × | ○ |
| | Isobornyl acrylate | △ | × | ○ |

It has been revealed as apparent through comparison between Table 10-1 and Table 10-2 that fter being mixed with a polyfunctional radical polymerization oligomer, a weight ratio of phenoxyethylacrylate to the other monofunctional radical polymerization monomers is 1 : 1, as with the basic constitution of (3), favorable characteristics may be obtained in combination with any one of an aromatic monofunctional radical polymerization monomer with a hydroxyl group and a heterocyclic monofunctional radical polymerization monomer, but no favorable results can be obtained in combination with other monofunctional radical polymerization monomers.

The inks given in Table 10-1 were used to mold decorating sheet shaped articles under the same conditions as those of Example 1. It was, therefore, possible to obtain strong decorating sheet shaped articles favorable in formability and also favorable in adhesion with a substrate.

In addition, insert molding shaped products could also be obtained without any difficulty.

### [Example 4]

Example 4 is characterized in that an aliphatic monofunctional radical polymerization monomer without a hydroxyl group is ethoxydiethylene glycol acrylate, an aliphatic monofunctional radical polymerization monomer with a hydroxyl group is any one of 2-hydroxyethylacrylate and 2-hydroxypropylacrylate, and an alicylic monofunctional radical polymerization monomer is any one of dicyclopentenyl acrylate and isobornyl acrylate in the previously described constitution of (4).

As with Example 1, providedwere a pigment, a photoreaction initiator, a high-polymer dispersing agent and additives. Other monofunctional radical polymerization monomers in a predetermined mixed quantity were mixed with a trifunctional urethane acrylate oligomer and phenoxyethylacrylate, each mixed quantity of which was predetermined as given in Table 11-1, and a test similar to Example 1 was conducted to obtain the results of individual characteristics as given in the table.

**[Table 11-1]**

| Types of monofunctional monomers | Chemical name | Mixed quantity of monofunctional monomer of the above chemical names (% by weight) | Mixed quantity of trifunctional urethane acrylate oligomer (% by weight) | Mixed quantity of phenoxyethylacrylate (% by weight) | Formability | Adhesiveness | Tackiness |
|---|---|---|---|---|---|---|---|
| Aliphatic monofunctional radical polymerization monomer (without hydroxyl group) | Ethoxydiethylene glycol acrylate | 27.0 | 6.0 | 54.0 | ○ | ○ | ○ |
| | | 7.5 | 3.8 | 75.7 | ○ | ○ | △ |
| | | 22.9 | 18.3 | 45.8 | △ | ○ | ○ |
| Aliphatic monofunctional radical polymerization monomer (with hydroxyl group) | 2-hydroxyethylacrylate | 27.0 | 6.0 | 54.0 | ○ | ○ | ○ |
| | 2-hydroxypropylacrylate | 27.0 | 6.0 | 54.0 | ○ | ○ | ○ |
| | 2-hydroxybutylacrylate | 27.0 | 6.0 | 54.0 | ○ | ○ | ○ |
| Alicylic monofunctional radical polymerization monomer | Dicyclopentenyl acrylate | 27.0 | 6.0 | 54.0 | ○ | ○ | ○ |
| | Isobornyl acrylate | 27.0 | 6.0 | 54.0 | ○ | △ | ○ |
| | | 7.5 | 3.8 | 75.7 | ○ | ○ | ○ |
| | | 28.0 | 2.9 | 56.1 | ○ | △ | ○ |
| | | 5.8 | 23.2 | 58.0 | ○ | ○ | ○ |
| | | 22.9 | 18.3 | 45.8 | ○ | △ | ○ |

In the test given in Table 11-1, a weight ratio according to the basic constitution of (4) was a tested combination to be a limit value thereof ,in particular, in combination with ethoxydiethylene glycol acrylate and isobornyl acrylate. The test has revealed that favorable results could be obtained at least in two characteristics.

Since it can be assumed that favorable results can also be obtained for the other monofunctional radical polymerization monomers, the validity of the constitution of (4) may be confirmed by referring to the test results given in Table 11-1.

After a trifunctional urethane acrylate oligomer as shown in Table 11-2 was mixed at 6.0% by weight with the combinations given in Table 11-1 and also phenoxyethylacrylate was mixed at 54.0% by weight, an aromatic monofunctional radical polymerization monomer without a hydroxyl group was mixed at 27.0% by weight and combined with phenoxyethylacrylate, and the same test was conducted, thereby obtaining the results of individual characteristics as shown in the table.

**[Table 11-2]**

| Types of monofunctional monomers | Chemical name | Formability | Adhesiveness | Tackiness |
|---|---|---|---|---|
| Aromatic monofunctional radical polymerization monomer (with hydroxyl group) | 2-hydroxy-3-phenoxypropylacrylate | ○ | × | ○ |

It has been revealed through comparison between Table 11-1 and Table 11-2 that after being mixed with a polyfunctional radical polymerization oligomer, a weight ratio of phenoxyethylacrylate to other functional radical polymerization monomers is 2 : 1, as with the basic constitution of (4), favorable characteristics can be obtained in combination of any one of an aliphatic monofunctional radical monomer without a hydroxyl group, an aliphatic monofunctional radical polymerization monomer with a hydroxyl group, and an alicylic monofunctional radical polymerization monomer, but no favorable results can be obtained in combination with an aromatic monofunctional radical polymerization monomer with a hydroxyl group.

The inks given in Table 11-1 were used to mold insert molding shaped products under the same conditions as those of Example 1. It was, therefore, possible to obtain strong insert molding shaped products substantially favorable in formability, adhesiveness and tackiness and also favorable in adhesion with a substrate.

### [Example 5]

Example 5 is characterized in that in the basic constitution of (5), after selection of isobornyl acrylate as an alicylic monofunctional radical polymerization monomer and a mixture of polyfunctional radical polymerization oligomer, among acrylate monomers belonging to all types, the aromatic monofunctional radical polymerization monomer without a hydroxyl group is any one of benzyl acrylate, phenoxydiethylene glycolacrylate, phenoxytetraethylene glycolacrylate and nonyl phenol tetraethylene glycolacrylate, the aromatic monofunctional radical polymerization monomer with a hydroxyl group is 2-hydroxy-3-phenoxypropylacrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxy ethylacrylate, 2-hydroxy propylacrylate and 2-hydroxy butylacrylate, an alicylic monofunctional radical polymerization monomer is dicyclopentenyl acrylate, and the heterocyclic monofunctional radical polymerization acrylate monomer is any one of N-vinylcaprolactam, acryloylmorphorine and tetrahydrofurfurylacrylate.

As with Example 1, providedwereapigment, aphotoreaction initiator, a high-polymer dispersing agent and an additive. Isobornyl acrylate in a predetermined quantity and the other monofunctional radical polymerization monomers in predetermined quantities were mixed with a trifunctional urethane acrylate oligomer and phenoxyethylacrylate, each mixed quantity of which was predetermined as shown in Table 12-1, and a test similar to Example 1 was conducted to obtain the results of individual characteristics as given in the table.

**[Table 12-1]**

| Type of monofunctional monomer | Chemical name | Mixed quantity of monofunctional monomer of the above chemical name (% by weight) | Mixed quantity of trifunctional urethane acrylate oligomer (% by weight) | Mixed quantity of phenoxyethylacrylate (% by weight) | Mixed quantity of isobornylacrylate (% by weight) | Formability | Adhesiveness | Tackiness |
|---|---|---|---|---|---|---|---|---|
| Aromatic monofunctional radical polymerization monomer (without hydroxyl group) | Benzylacrylate | 10.0 | 6.0 | 46.0 | 25.0 | ○ | ○ | ○ |
| | Phenoxydiethylene glycolacrylate | 10.0 | 6.0 | 46.0 | 25.0 | ○ | ○ | ○ |
| | Phenoxytetraethylene glycolacrylate | 10.0 | 6.0 | 46.0 | 25.0 | ○ | ○ | ○ |
| | Phenol EO modified (2 mol) acrylate | 10.0 | 6.0 | 46.0 | 25.0 | ○ | ○ | ○ |
| Aromatic monofunctional radical polymerization monomer (with hydroxyl group) | 2-hydroxy-3-phenoxypropylacrylate | 10.0 | 6.0 | 46.0 | 25.0 | ○ | ○ | ○ |
| Aliphatic monofunctional radical polymerization monomer (without hydroxyl group) | Ethoxydiethylene glycolacrylate | 10.0 | 6.0 | 46.0 | 25.0 | ○ | ○ | ○ |
| Aliphatic monofunctional radical polymerization monomer (with hydroxyl group) | 2-hydroxyethylacrylate | 10.0 | 6.0 | 46.0 | 25.0 | ○ | ○ | ○ |
| | 2-hydroxypropylacrylate | 10.0 | 6.0 | 46.0 | 25.0 | ○ | ○ | ○ |
| | 2-hydroxybutylacrylate | 10.0 | 6.0 | 46.0 | 25.0 | ○ | ○ | ○ |
| Alicylic monofunctional radical polymerization monomer | Dicyclopentenylacrylate | 10.0 | 6.0 | 46.0 | 25.0 | ○ | ○ | ○ |
| Heterocyclic monofunctional radical polymerization monomer | Tetrahydrofurfurylacrylate | 10.0 | 6.0 | 46.0 | 25.0 | ○ | ○ | ○ |
| | N-vinylcaprolactam | 10.0 | 6.0 | 46.0 | 25.0 | ○ | ○ | ○ |
| | | 7.0 | 3.5 | 69.5 | 7.0 | ○ | ○ | ○ |
| | | 32.9 | 2.4 | 47.0 | 4.7 | ○ | ○ | ○ |
| | | 4.7 | 2.4 | 47.0 | 32.9 | ○ | △ | ○ |
| | | 24.8 | 1.8 | 35.6 | 24.8 | ○ | △ | ○ |
| | | 5.5 | 21.7 | 54.3 | 5.5 | ○ | ○ | ○ |
| | | 27.6 | 15.8 | 39.6 | 4.0 | △ | ○ | ○ |
| | | 4.0 | 15.8 | 39.6 | 27.6 | ○ | △ | ○ |
| | | 21.7 | 12.5 | 31.1 | 21.7 | ○ | △ | ○ |
| | Acryloylmorphorine | 10.0 | 6.0 | 46.0 | 25.0 | ○ | ○ | ○ |

In the test given in Table 12-1, a weight ratio according to the constitution of (6) was a tested combination to be a limit value thereof ,in particular, by adopting various combinations of isobornyl acrylate and N-vinylcaprolactam. The test has revealed that favorable results were obtained at least in two characteristics.

It is assumed that similar characteristics may be obtained in the case where other monofunctional radical polymerization monomers are adopted. When the above-described assumption is taken into account, confirmation can be made for the validity of the constitution of (5) by referring to the test results given in Table 12-1.

Then, after a pigment, a photoreaction initiator, a high-polymer dispersing agent and an additive were mixed at the same percentages as those of Table 5-1, a polyfunctional radical polymerization oligomer such as a trifunctional urethane acrylate oligomer was not mixed, but phenoxyethylacrylate, isobornyl acrylate and N-vinylcaprolactam as other monofunctional radical polymerization monomers were mixed respectively at 50.0% by weight, 27.0% by weight and 9.0% by weight were mixed, thereby obtaining the results of individual characteristics as shown in Table 12-2.

**[Table 12-2]**

| Type of monofunctional monomer | Chemical name | Formability | Adhesiveness | Tackiness |
|---|---|---|---|---|
| Heterocyclic monofunctional radical polymerization monomer | N-vinylcaprolactam | △ | ○ | △ |

It is has been revealed as apparent through comparison between Table 12-1 and Table 12-2 that after being mixed with a polyfunctional radical polymerization oligomer, the photo polymerization reactive composition is a combination of phenoxyethylacrylate with any one monomer selected from alicylic monofunctional radical polymerization monomers and any one monomer selected from monofunctional radical polymerization monomers belonging to all other types, that is, a total of three monomers, favorable characteristics may be obtained irrespective of types of other monofunctional radical polymerization monomers, but favorable results may not be necessarily obtained in the absence of a polyfunctional radical polymerization oligomer which is a precondition given in the above-described combination.

The inks given in Table 12-1 were used to mold insert molding shaped products under the same conditions as those of Example 1. It was, therefore, possible to obtain strong insert molding shaped products substantially favorable in formability, adhesiveness and tackiness and also favorable in adhesion with a substrate.

### [Example 6]

Example 6 is characterized in that in the constitution of (6), after selection of N-vinylcaprolactam as a heterocyclic monofunctional radical polymerization monomer, among radical polymerization monomers belonging to all types, the aromatic monofunctional radical polymerization monomer without a hydroxyl group is any one of benzyl acrylate, phenoxydiethylene glycolacrylate, phenoxytetraethylene glycolacrylate and nonyl phenol tetraethylene glycolacrylate, the aromatic monofunctional radical polymerization monomer with a hydroxyl group is 2-hydroxy-3-phenoxypropylacrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxyethylacrylate, 2-hydroxy propylacrylate and 2-hydroxy butylacrylate, the alicylic monofunctional radical polymerization monomer is any one of dicyclopentenyl acrylate and isobornyl acrylate, and the heterocyclic monofunctional radical polymerization monomers are acryloylmorphorine and tetrahydrofurfurylacrylate.

As wi th Example 1, provided were a pigment, aphotoreaction initiator, a high-polymer dispersing agent and an additive. N-vinylcaprolactam in a predetermined mixed quantity and the other monofunctional radical polymerization monomers in a predetermined mixed quantity were mixed with a trifunctional urethane acrylate oligomer and phenoxyethylacrylate, each mixed quantity of which was predetermined as given in Table 14-1, a test similar to Example 1 was conducted, thereby obtaining the results of individual characteristics as shown in the table.

**[Table 13-1]**

| Type of monofunctional monomer | Chemical name | Mixed quantity of mono-functional monomer of the above chemical name (% by weight ) | Mixed quantity of trifunctional urethane acrylate oligomer (% by weight) | Mixed quantity of phenoxyethylacrylate (% by weight) | Mixed quantity of N-vinylcaprolactam (% by weight) | Formability | Adhesiveness | Tackiness |
|---|---|---|---|---|---|---|---|---|
| Aromatic monofunctional radical polymerization monomer (without hydroxyl group) | Benzyl acrylate | 10.0 | 6.0 | 46.0 | 25.0 | ○ | ○ | ○ |
| | Phenoxy diethylene glycolacrylate | 10.0 | 6.0 | 46.0 | 25.0 | ○ | ○ | ○ |
| | Phenoxy tetraethylene glycolacrylate | 10.0 | 6.0 | 46.0 | 25.0 | ○ | ○ | ○ |
| | Phenol EO modified (2 mol) acrylate | 10.0 | 6.0 | 46.0 | 25.0 | ○ | ○ | ○ |
| Aromatic monofunctional radical polymerization monomer (with hydroxyl group) | 2-hydroxy-3-phenoxy propylacrylate | 10.0 | 6.0 | 46.0 | 25.0 | ○ | ○ | ○ |
| Aliphatic monofunctional radical polymerization monomer (without hydroxyl group) | Ethoxydiethylene glycolacrylate | 10.0 | 6.0 | 46.0 | 25.0 | ○ | ○ | ○ |
| Aliphatic monofunctional radical polymerization monomer (with hydroxyl group) | 2-hydroxy ethylacrylate | 10.0 | 6.0 | 46.0 | 25.0 | ○ | ○ | ○ |
| | | 7.0 | 3.5 | 69.5 | 7.0 | ○ | ○ | ○ |
| | | 32.9 | 2.4 | 47.0 | 4.7 | ○ | ○ | ○ |
| | | 4.7 | 2.4 | 47.0 | 32.9 | ○ | ○ | ○ |
| | | 24.8 | 1.8 | 35.6 | 24.8 | ○ | ○ | ○ |
| | | 5.5 | 21.7 | 54.3 | 5.5 | ○ | ○ | ○ |
| | | 27.6 | 15.8 | 39.6 | 4.0 | △ | ○ | ○ |
| | | 4.0 | 15.8 | 39.6 | 27.6 | △ | ○ | ○ |
| | | 21.7 | 12.5 | 31.1 | 21.7 | △ | ○ | ○ |
| | 2-hydroxy propylacrylate | 10.0 | 6.0 | 46.0 | 25.0 | ○ | ○ | ○ |
| | 2-hydroxy butylacrylate | 10.0 | 6.0 | 46.0 | 25.0 | ○ | ○ | ○ |
| Alicylic monofunctional radical polymerization monomer | Dicyclopentenyl acrylate | 10.0 | 6.0 | 46.0 | 25.0 | ○ | ○ | ○ |
| | Isobornyl acrylate | 10.0 | 6.0 | 46.0 | 25.0 | ○ | ○ | ○ |
| Heterocyclic monofunctional radical polymerization monomer | Tetrahydrofurfuryla crylate | 10.0 | 6.0 | 46.0 | 25.0 | ○ | ○ | ○ |
| | Acryloylmorphorine | 10.0 | 6.0 | 46.0 | 25.0 | ○ | ○ | ○ |

In the test given in Table 13-1, a weight ratio according to the constitution of (6) was tested up to a limit value thereof, in particular, in 2-hydroxy ethylacrylate and N-vinylcaprolactam. The test has revealed that favorable results were obtained at least in two characteristics.

It is assumed that similar favorable characteristics can be obtained in combination with a monofunctional radical polymerization monomer other than 2-hydroxy ethylacrylate and N-vinylcaprolactam. When the above-described assumption is taken into account, the validity of the constitution of (6) may be confirmed by referring to the test results given in Table 13-1.

Then, after a pigment, a photoreaction initiator, a high-polymer dispersing agent and an additive were mixed at the same percentages as those of Table 13-1, a polyfunctional radical polymerization oligomer such as a trifunctional urethane acrylate oligomer is not mixed, but phenoxyethylacrylate, N-vinylcaprolactam and isobornyl acrylate as the other monofunctional radical polymerization monomers were mixed respectively at 50.0% by weight, 27.0% by weight and 10.0% by weight mixed, thereby obtaining the results of individual characteristics as shown in Table 13-2.

**[Table 13-2]**

| Type of monofunctional monomer | Chemical name | Formability | Adhesiveness | Tackiness |
|---|---|---|---|---|
| Alicylic monofunctional radical polymerization monomer | Isobornyl acrylate | △ | ○ | △ |

It has been revealed as apparent through comparison between Table 13-1 and Table 13-2 that where after being mixed with a polyfunctional radical polymerization oligomer, the photo polymerization reactive composition is a combination of phenoxyethylacrylate with any one monomer selected from heterocyclic monofunctionalradicalpolymerization monomer and any one monomer selected from monofunctional radical polymerization monomers belonging to all other types, that is, a total of three monomers, favorable characteristics may be obtained irrespective of types of other monofunctional radical polymerization monomers but favorable results may not be necessarily obtained in the absence of a polyfunctional radical polymerization oligomer which is given as a precondition in the above combination.

The inks given in Table 13-1 were used to mold insert molding shaped products under the same conditions as those of Example 1. It was, therefore, possible to obtain strong insert molding shaped products substantially favorable in formability, adhesiveness and tackiness and also favorable in adhesion with a substrate.

### [Example 7]

Example 7 is characterized in that in the basic constitution of (7), 2-hydroxy-3-phenoxypropylacrylate is used as an aromatic monofunctional radical polymerization monomer with a hydroxyl group and two alicylic monofunctional radical polymerization monomers are isobornyl acrylate and dicyclopentenyl oxyethylacrylate.

As with Example 1, provided were a pigment, a photoreaction initiator, a high-polymer dispersing agent and an additive.

2-hydroxy-3-phenoxypropylacrylate in a predetermined mixed quantity as well as isobornyl acrylate and dicyclopentenyl oxyethylacrylate at the respective predetermined mixed quantities were mixed with a trifunctional urethane acrylate oligomer and phenoxyethylacrylate,each mixed quantity of which was predetermined as given in Table 14-1, and a test similar to Example 1 was conducted, thereby obtaining the results of individual characteristics as shown in the table.

**[Table 14-1]**

| Type of monofunctional monomer | Chemical name | Mixed quantity of monofunctional monomer of the above chemical name (% by weight) | Mixed quantity of trifunctional urethane acrylate oligomer (% by weight) | Mixed quantity of phenoxyethylacrylate (% by weight) | Mixed quantity of 2-hydroxy-3-phenoxypropyla crylate (% by weight) | Formability | Adhesiveness | Tackiness |
|---|---|---|---|---|---|---|---|---|
| Alicylic monofunctional radical polymerization monomer | Dicyclopenteny 1 oxyethylacrylate and isobornylacrylate* | Each 3.5 | 3.5 | 69.5 | 7.0 | ○ | ○ | ○ |
| | | Each 2.4 | 2.4 | 47.0 | 32.8 | ○ | △ | ○ |
| | | Each 16.5 | 2.4 | 47.0 | 4.6 | ○ | △ | ○ |
| | | Each 12.4 | 1.8 | 35.6 | 24.8 | ○ | △ | ○ |
| | | Each 2.8 | 21.7 | 54.3 | 5.4 | △ | ○ | ○ |
| | | Each 2.0 | 15.8 | 39.6 | 27.6 | ○ | △ | ○ |
| | | Each 13.8 | 15.8 | 39.6 | 4.0 | ○ | △ | ○ |
| | | Each 10.9 | 12.5 | 31.1 | 21.6 | ○ | △ | ○ |

| | | | | | | | | |
|---|---|---|---|---|---|---|---|---|
| * Dicyclopentenyl oxyethylacrylate and isobornyl acrylate were mixed at equal percentages with each other. | | | | | | | | |

In the test given in Table 14-1, a weight ratio according to the constitution of (7) was tested at various values, in particular, in combination with 2-hydroxy-3-phenoxypropylacrylate, dicyclopentenyl oxyethylacrylate and isobornyl acrylate. The test has revealed that favorable results were obtained at least in two characteristics.

It is assumed that similar favorable characteristics may be obtained in combination of an aromatic monofunctional radical polymerization monomer with a hydroxyl group other than 2-hydroxy-3-phenoxypropylacrylate, dicyclopentenyl oxyethylacrylate and an alicylic monofunctional radical polymerization monomer other than isobornyl acrylate. When the above-described assumption is taken into account, the validity of the constitution of (7) maybe confirmed by referring to the test results given in Table 14-1.

Then, after one of dicyclopentenyl oxyethylacrylate was mixed at 27.0% by weight as an alicylic monofunctional radical polymerization monomer as shown in Table 14-2 and N-1vinylcaprolactam was mixed at 10.0% by weight as a heterocyclic monofunctional radical polymerization monomer, trifunctional urethane acrylate oligomer was not mixed, but phenoxyethylacrylate was mixed at 50.0% by weight, thereby obtaining the results of individual characteristics as shown in Table 14-2.

**[Table 14-2]**

| Type of monofunctional monomer | Chemical name | Formability | Adhesiveness | Tackiness |
|---|---|---|---|---|
| Alicylic monofunctional radical polymerization monomer | Dicyclopentenyl oxyethylacrylate | △ | ○ | △ |

It has been revealed as apparent through comparison between Table 14-1 and Table 14-2 that where no polyfunctional radical polymerization oligomer is mixed at all, no mixture ratio required in the constitution of (7) is satisfied and one type of alicylic monofunctional radical polymerization monomers is used, no favorable characteristics are obtained as shown in Table 14-1, which is the constitution of (7).

The ink given in Table 14-1 was used to mold insert molding shaped products under the same conditions as those of Example 1. It was, therefore, possible to obtain strong insert molding shaped products substantially favorable in formability, adhesiveness and tackiness and also favorable in adhesion with a substrate.

### [Example 8]

Example 8 is characterized in that in the basic constitution of (8), after selection of isobornyl acrylate as an alicylic monofunctional radical polymerization monomer, N-vinylcaprolactam as a heterocyclic monofunctional radical polymerization monomer, among monofunctional radical polymerization monomers belonging to all other types, the aromatic monofunctionalradicalpolymerization monomer without a hydroxyl group is any one of benzyl acrylate, phenoxydiethylene glycolacrylate, phenoxytetraethylene glycolacrylate and nonyl phenol tetraethylene glycolacrylate, the aromatic monofunctional radical polymerization monomer with a hydroxyl group is 2-hydroxy-3-phenoxypropylacrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxyethylacrylate, 2-hydroxy propylacrylate and 2-hydroxy butylacrylate, the aliphatic monofunctional radical polymerization monomer is any one of 2-hydroxy ethylacrylate, 2-hydroxy propylacrylate and 2-hydroxy butylacrylate, the alicylic monofunctional radical polymerization monomer is any one of dicyclopentenyl acrylate and dicyclopentenyl oxyethylacrylate, and the heterocyclic monofunctional acrylate monomer is any one of acryloylmorphorine and tetrahydrofurfurylacrylate.

As with Example 1, provided were a pigment, aphotoreaction initiator, a high-polymer dispersing agent and an additives. Isobornyl acrylate in a predetermined mixed quantity and N-vinylcaprolactam in a predetermined mixed quantity were mixed with a trifunctional urethane acrylate oligomer and phenoxyethylacrylate, each mixed quantity of which was predetermined as shown in Table 15-1, and the other monofunctional radical polymerization monomers in a predetermined mixed quantity was also mixed, thereby obtaining the results of individual characteristics as shown in the table.

**[Table 15-1]**

| Type of monofunctional monomer | Chemical name | Mixed quantity of mono-functional monomer of the above chemical name (% by weight) | Mixed quantity of trifunctional urethaneacrylate oligomer (% by weight) | Mixed quantity of phenoxyethylacrylate (% by weight) | Mixed quantity of isobornyl acrylate (% by weight) | Mixed quantity of N-vinylcaprolactam (% by weight | Formability | Adhesiveness | Tackiness |
|---|---|---|---|---|---|---|---|---|---|
| Aromatic monofunctional radical polymerization monomer (without hydroxyl group) | Benzylacrylate | 7.5 | 6.0 | 40.5 | 20.0 | 13.0 | ○ | ○ | ○ |
| | | 6.6 | 3.2 | 64.0 | 6.6 | 6.6 | ○ | ○ | ○ |
| | | 38.5 | 2.0 | 38.5 | 4.0 | 4.0 | ○ | △ | ○ |
| | | 5.0 | 2.4 | 49.8 | 5.0 | 24.8 | ○ | ○ | ○ |
| | | 32.8 | 1.7 | 32.8 | 3.3 | 16.4 | ○ | ○ | ○ |
| | | 5.0 | 2.4 | 49.8 | 24.8 | 5.0 | ○ | △ | ○ |
| | | 32.8 | 1.7 | 32.8 | 16.4 | 3.3 | ○ | △ | ○ |
| | | 5.0 | 2.0 | 40.0 | 20.0 | 20.0 | ○ | ○ | ○ |
| | | 28.5 | 1.5 | 28.6 | 14.2 | 14.2 | ○ | ○ | ○ |
| | | 5.2 | 20.4 | 51.0 | 5.2 | 5.2 | △ | ○ | ○ |
| | | 33.3 | 13.4 | 33.5 | 3.4 | 3.4 | ○ | ○ | ○ |
| | | 4.2 | 16.5 | 41.4 | 4.2 | 20.7 | ○ | ○ | ○ |
| | | 29.0 | 11.6 | 29.0 | 2.9 | 14.5 | ○ | ○ | ○ |
| | | 4.2 | 16.5 | 41.4 | 20.7 | 4.2 | ○ | △ | ○ |
| | | 29.0 | 11.6 | 29.0 | 14.5 | 2.9 | ○ | △ | ○ |
| | | 3.5 | 13.9 | 34.8 | 17.4 | 17.4 | ○ | ○ | ○ |
| | | 25.6 | 10.2 | 25.6 | 12.8 | 12.8 | ○ | ○ | ○ |
| | Phenoxydiethylene glycolacrylate | 7.5 | 6.0 | 40.5 | 20.0 | 13.0 | ○ | ○ | ○ |
| | Phenoxytetraethylene glycolacrylate | 7.5 | 6.0 | 40.5 | 20.0 | 13.0 | ○ | ○ | ○ |
| | Phenol EO modified (2 mol) acrylate | 7.5 | 6.0 | 40.5 | 20.0 | 13.0 | ○ | ○ | ○ |
| Aromatic monofunctional radical polymerization monomer (with hydroxyl group) | 2-hydroxy-3-phenoxypropylacrylate | 7.5 | 6.0 | 40.5 | 20.0 | 13.0 | ○ | ○ | ○ |
| Aliphatic monofunctional radical polymerization monomer (without hydroxyl group) | Ethoxydiethyleneglycolacrylate | 7.5 | 6.0 | 40.5 | 20.0 | 13.0 | ○ | ○ | ○ |
| Aliphatic monofunctional radical polymerization monomer (with hydroxyl group) | 2-hydroxyethylacrylate (HOA) | 7.5 | 6.0 | 40.5 | 20.0 | 13.0 | ○ | ○ | ○ |
| | 2-hydroxyproplylacrylate | 7.5 | 6.0 | 40.5 | 20.0 | 13.0 | ○ | ○ | ○ |
| | 2-hydroxybutylacrylate | 7.5 | 6.0 | 40.5 | 20.0 | 13.0 | ○ | ○ | ○ |
| Alicylic monofunctional radical polymerization monomer | Dicyclopentenylacrylate | 7.5 | 6.0 | 40.5 | 20.0 | 13.0 | ○ | ○ | ○ |
| Heterocyclic monofunctional radical polymerization monomer | Tetrahydrofurfurylacrylate | 7.5 | 6.0 | 40.5 | 20.0 | 13.0 | ○ | ○ | ○ |
| | Acryloylmorphorine | 7.5 | 6.0 | 40.5 | 20.0 | 13.0 | ○ | ○ | ○ |

As shown in Table 15-1, a weight ratio according to the constitution of (8) was tested for various required values, in particular, in combination with benzyl acrylate as a monofunctional monomer, and also tested up to a limited value. The test has revealed the characteristics, and it was confirmed that favorable results could be obtained at least in two characteristics.

In this instance, it is assumed that favorable results may be obtained for other monofunctional monomers. When the above-described assumption is taken into account, the validity of the constitution of (8) may be confirmed by referring to the test results shown in Table 15-1.

Then, a polyfunctional radical polymerization oligomer, phenoxyethylacrylate, isobornyl acrylate and N-vinylcaprolactam were mixed respectively at 6.0% by weight, 48.0% by weight, 24.0% by weight and 8.0% by weight, and as shown in Table 15-2, a polyfunctional radical polymerization monomer was mixed at 1.0% by weight, thereby obtaining the results of individual characteristics as shown in the table.

**[Table 15-2]**

| Type of monofunctional monomer | Chemical name | Formability | Adhesiveness | Tackiness |
|---|---|---|---|---|
| Bifunctional monomer | Tripropylene glycoldiacrylate | △ | ○ | ○ |
| | Hexanediol diacrylate | × | ○ | ○ |
| Trifunctional monomer | Trimethylol propane triacrylate | × | ○ | ○ |

It has been revealed as apparent through comparison between Table 15-1 and Table 15-2 that in the basic constitution of (8), favorable results may be obtained, irrespective of types of other monofunctional radical polymerization monomers, but, where a polyfunctional radical polymerization monomer is mixed in place of these other monofunctional radical polymerization monomers, favorable characteristics as provided in the basic constitution of (8) may necessarily be lost, even if mixed only in a small quantity.

The inks given in Table 15-1 were used to mold insert molding shaped products under the same conditions as those of Example 1. It was, therefore, possible to obtain strong insert molding shaped products substantially favorable in formability, adhesiveness and tackiness and also favorable in adhesion with a substrate, without any state of peeling.

### [Industrial Applicability]

The present invention is applicable to the field of UV inkjet inks inwhichphenoxyethylacrylate is abasic composition used as a photo polymerization reactive composition and a major component is a monofunctional radical polymerization monomer and also applicable to the field of decorating shaped products based on the inks.

## Claims

1. A method for manufacturing inkjet system ultraviolet solid curable inks in which essential components are a photoreaction initiator and a photo polymerization reactive composition, the method for manufacturing inkjet systemultraviolet curable inks, wherein the photo polymerization reactive composition is a combination of phenoxyethylacrylate with one monomer selected from any one of an aromatic monofunctional radical polymerization monomer with a hydroxyl group and a heterocyclic monofunctional radical polymerizationmonomer, that is, a total of two monomers, and a weight ratio of phenoxyethylacrylate to the other monofunctional radical polymerization monomers is in a range of 1 : 0.5 to 1.5.

2. The method for manufacturing inkjet system ultraviolet curable inks as set forth in claim 1, wherein the aromatic monofunctional radical polymerization monomer with a hydroxyl group is 2-hydroxy-3-phenoxypropylacrylate and the heterocyclic monofunctional radical polymerization monomer is N-vinylcaprolactam.

3. A method for manufacturing inkjet system ultraviolet curable inks in which essential components are a photoreaction initiator and a photo polymerization reactive composition, the method for manufacturing inkjet systemultraviolet curable inks, wherein after being mixed with a polyfunctional radical polymerization oligomer, the photo polymerization reactive composition is mixed with only phenoxyethylacrylate as a monofunctional radical polymerization monomer, and a weight ratio of the polyfunctional radical polymerization oligomer to phenoxyethylacrylate is in a range of 0.05 to 0.3 : 1.

4. A method for manufacturing inkjet system ultraviolet curable inks in which essential components are a photoreaction initiator and a photo polymerization reactive composition, the method for manufacturing inkjet systemultraviolet curable inks, wherein after being mixed with a polyfunctional radical polymerization oligomer, the photo polymerization reactive composition is a combination of phenoxyethylacrylate with one other monofunctional radical polymerization monomer selected from any one of an aromatic monofunctional radical polymerization monomer without a hydroxyl group (however, excluding phenoxyethylacrylate) and a heterocyclic monofunctional radical polymerization monomer, that is, a total of two monomers, and a weight ratio of the polyfunctional radical polymerization oligomer to phenoxyethylacrylate to the other monofunctional radical polymerization monomers is in the respective ranges of 0.05 to 0.4 : 1 : 0.1 to 1.

5. The method for manufacturing inkjet system ultraviolet solid curable inks as set forth in claim 4, wherein the aromatic monofunctional radical polymerization monomer without a hydroxyl group is any one of benzyl acrylate and phenoxydiethylene glycolacrylate, and the heterocyclic monofunctional radical polymerization monomer is N-vinylcaprolactam.

6. A method for manufacturing inkjet system ultraviolet curable inks in which essential components are a photoreaction initiator and a photo polymerization reactive composition, the method for manufacturing inkjet system ultraviolet curable inks, wherein after being mixed with a polyfunctional radical polymerization oligomer, the photo polymerization reactive composition is a combination of phenoxyethylacrylate with one other monofunctional radical polymerization monomer selected from an aliphatic monofunctional radical polymerization monomer without a hydroxyl group, an aliphatic monofunctional radical polymerization monomer with a hydroxyl group and any one of an alicylic monofunctional radical polymerization monomer, that is, a total of two monomers, and a weight ratio of the polyfunctional radical polymerization oligomer to phenoxyethylacrylate to the other monofunctional radical polymerization monomers is in the respective ranges of 0.05 to 0.4 : 1 : 0.1 to 0.5.

7. The method for manufacturing inkjet system ultraviolet curable inks as set forth in claim 6, wherein the aliphatic monofunctional radical polymerization monomer without a hydroxyl group is ethoxydiethylene glycolacrylate, the aliphatic monofunctional radical polymerization monomer with a hydroxyl group is any one of 2-hydroxy ethylacrylate and 2-hydroxy propylacrylate, and the alicylic monofunctional radical polymerization monomer is dicyclopentenyl acrylate and isobornyl acrylate.

8. A method for manufacturing inkjet system ultraviolet curable inks in which essential components are a photoreaction initiator and a photo polymerization reactive composition, the method for manufacturing inkjet system ultraviolet curable inks, wherein after being mixed with a polyfunctional radical polymerization oligomer, the photo polymerization reactive composition is a combination of phenoxyethylacrylate with one monofunctional radical polymerization monomer selected from alicylic monofunctional radical polymerization monomers, and one other monofunctional radical polymerization monomer selected from monofunctional radical polymerization monomers belonging to all other types (however, excluding phenoxyethylacrylate and the alicylic monofunctional radical polymerization monomer mixed with phenoxyethylacrylate), that is, a total of three monomers, and a weight ratio of the polyfunctional radical polymerization oligomer to phenoxyethylacrylate to the alicylic monofunctional radical polymerization monomer to the other monofunctional radical polymerization monomers is in the respective ranges of 0.05 to 0.4 : 1 : 0.1 to 0.7: 0.1 to 0.7.

9. The method for manufacturing inkjet system ultraviolet curable inks as set forth in claim 8, wherein the alicylic monofunctional radical polymerization acrylate monomer is isobornyl acrylate.

10. The method for manufacturing inkjet system ultraviolet curable inks as set forth in claim 9, wherein, among radical polymerization monomers belonging to all types, the aromatic monofunctional radical polymerization monomer without a hydroxyl group is any one of benzyl acrylate, phenoxydiethylene glycolacrylate, phenoxytetraethylene glycolacrylate and nonylphenol tetraethylene glycolacrylate, the aromatic monofunctional radical polymerization monomer with a hydroxyl group is 2-hydroxy-3-phenoxypropyl acrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxyethylacrylate, 2-hydroxy propylacrylate and 2-hydroxy butylacrylate, the alicylic monofunctional radical polymerization monomer is dicyclopentenyl acrylate and the heterocyclic monofunctional radical polymerization monomer is any one of tetrahydrofurfurylacrylate, N-vinylcaprolactam and acryloylmorphorine.

11. A method for manufacturing inkjet system ultraviolet curable inks in which essential components are a photoreaction initiator and a photo polymerization reactive composition, the method for manufacturing inkjet system ultraviolet curable inks wherein after being mixed with a polyfunctional radical polymerization oligomer, the photo polymerization reactive composition is a combination of phenoxyethylacrylate with one monofunctional radical polymerization monomer selected from heterocyclic monofunctional radical polymerization monomers, and one other monofunctional radical polymerization monomer selected from monofunctional radical polymerization monomers belonging to all other types (however, excluding phenoxyethylacrylate and the heterocyclic monofunctional radical polymerization monomer mixed with phenoxyethylacrylate), that is, a total of three monomers, and a weight ratio of the polyfunctional radical polymerization oligomer to phenoxyethylacrylate to one monomer selected from the heterocyclic monofunctional radical polymerization monomers to the other monofunctional radical polymerization monomers is in the respective ranges of 0.05 to 0.4 : 1 : 0.1 to 0.7 : 0.1 to 0.7.

12. The method for manufacturing inkjet system ultraviolet curable inks as set forth in claim 11, wherein the heterocyclic monofunctional radical polymerization monomer is N-vinylcaprolactam.

13. The method for manufacturing inkjet system ultraviolet curable inks as set forth in claim 12, wherein, among radical polymerization monomers belonging to all types, the aromatic monofunctional radical polymerization monomer without a hydroxyl group is any one of benzyl acrylate, phenoxydiethylene glycolacrylate, phenoxytetraethylene glycolacrylate and nonylphenol tetraethylene glycolacrylate, the aromatic monofunctional radical polymerization monomer with a hydroxyl group is 2-hydroxy-3-phenoxypropylacrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxy ethylacrylate, 2-hydroxy propylacrylate and 2-hydroxy butylacrylate, the alicylic monofunctional radical polymerization monomer is any one of dicyclopentenyl acrylate and isobornyl acrylate, and the heterocyclic monofunctional radical polymerization monomer is any one of acryloylmorphorine and tetrahydrofurfuryl acrylate.

14. A method for manufacturing inkjet system ultraviolet curable inks in which essential components are a photoreaction initiator and a photo polymerization reactive composition, the method for manufacturing inkjet system ultraviolet curable inks, wherein after being mixed with a polyfunctional radical polymerization oligomer, the photo polymerization reactive composition is a combination of phenoxyethylacrylate with two monofunctional radical polymerization monomers selected from alicylic monofunctional radical polymerization monomers and one other monofunctional radical polymerization monomer selected from monofunctional radical polymerization monomers belonging to all other types (however, excluding phenoxyethylacrylate and the two alicylic monofunctional radical polymerization monomers mixed with phenoxyethylacrylate), that is, a total of four monomers, and a weight ratio of the polyfunctional radical polymerization oligomer to phenoxyethylacrylate to two alicylic monofunctional radical polymerization monomers to the other monofunctional radical polymerization monomers is in the respective ranges of 0.05 to 0.4 : 1 : 0.1 to 0.7 : 0.1 to 0.7.

15. The method for manufacturing inkjet system ultraviolet curable inks as set forth in claim 14, wherein the two alicylic monofunctional radical polymerization acrylate monomers are dicyclopentenyl oxyethylacrylate and isobornyl acrylate.

16. The method for manufacturing inkjet system ultraviolet curable inks as set forth in claim 15, wherein, among radical polymerization monomers belonging to all types, the aromatic monofunctional radical polymerization monomer without a hydroxyl group is any one of benzyl acrylate, phenoxydiethylene glycolacrylate, phenoxytetraethylene glycolacrylate and nonylphenol tetraethylene glycolacrylate, the aromatic monofunctional radical polymerization monomer with a hydroxyl group is 2-hydroxy-3-phenoxypropylacrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxyethylacrylate, 2-hydroxy propylacrylate and 2-hydroxy butylacrylate, the alicylic monofunctional radical polymerization monomer is dicyclopentenyl acrylate, and the heterocyclic monofunctional radical polymerization monomer is any one of tetrahydrofurfurylacrylate, N-vinylcaprolactam and acryloylmorphorine.

17. A method for manufacturing inkjet system ultraviolet curable inks in which essential components are a photoreaction initiator and a photo polymerization reactive composition, the method for manufacturing inkjet system ultraviolet curable inks, wherein, with a mixture of a polyfunctional radical polymerization oligomer given as a precondition, the photo polymerization reactive composition is a combination of phenoxyethylacrylate with one monofunctional radical polymerization monomer selected from alicylic monofunctional radical polymerization monomers, one monofunctional radical polymerization monomer selected from heterocyclic monofunctional radical polymerization monomers, and one other monofunctional radical polymerization monomer selected from monofunctional radical polymerization monomers belonging to all other types (however, excluding phenoxyethylacrylate, the alicylic monofunctional radical polymerization monomer and the heterocyclic monofunctional radical polymerization monomer mixed with phenoxyethylacrylate), that is, a total of four monomers, and a weight ratio of the polyfunctional radical polymerization oligomer to phenoxyethylacrylate to the alicylic monofunctional radical polymerization monomer to the heterocyclic monofunctional radical polymerization monomer to the other monofunctional radical polymerization monomers is in the respective ranges of 0.05 to 0.4 : 1 : 0.1 to 0.5 : 0.1 to 0.5 : 0.1 to 1.

18. The method for manufacturing inkjet system ultraviolet curable inks as set forth in claim 17, wherein, one monomer selected from alicylic monofunctional radical polymerization monomers is isobornyl acrylate and, one monomer selected from heterocyclic monofunctional radical polymerization monomers, is N-vinylcaprolactam.

19. The method for manufacturing inkjet system ultraviolet curable inks as set forth in claim 18, wherein, among monofunctional radical polymerization monomers belonging to all other types, the aromatic monofunctional radical polymerization monomer without a hydroxyl group is any one of benzyl acrylate, phenoxydiethylene glycolacrylate, phenoxytetraethylene glycolacrylate and nonylphenol tetraethylene glycolacrylate, the aromatic monofunctional radical polymerization monomer with a hydroxyl group is 2-hydroxy-3-phenoxypropylacrylate, the aliphatic monofunctional radical polymerization monomer without a hydroxyl group is ethoxydiethylene glycolacrylate, the aliphatic monofunctional radical polymerization monomer with a hydroxyl group is any one of 2-hydroxy ethylacrylate, 2-hydroxy propylacrylate and 2-hydroxy butylacrylate, the alicylic monofunctional radical polymerization monomer is any one of dicyclopentenyl acrylate and dicyclopentenyl oxyethylacrylate, the heterocyclic monofunctional radical polymerization monomer is any one of tetrahydrofurfuryl acrylate and acryloylmorphorine.

20. Inkjet system ultraviolet curable inks manufactured according to the methods as set forth in claims 1, 2, 3, 4, 5, 6, 7, 8, 9, 10, 11, 12, 13, 14, 15, 16, 17, 18 and 19.

21. Decorating printed matter which forms a decorating lamination layer by curing processes in which the inkjet system ultraviolet curable inks as set forth in claim 20 are applied to a substrate by inkjet injection or printing to give a single or a plurality of coated layers and ultraviolet rays are irradiated on the coated layers.

22. Decorating sheet shaped articles obtained by forming the decorating printed matter as set forth in claim 21 by vacuum forming or pressure forming.

23. Insert molding shaped products formed integrally by injecting a molding resin by using an injection machine to the decorating printed matter as set forth in claim 21 or the decorating sheet shaped articles as set forth in claim 22.
